# FASCICULE DE BREVET EUROPEEN

(11) **EP 0 836 680 B1**
(45) Date de publication et mention de la délivrance du brevet: **04.08.1999**
(21) Numéro de dépôt: 96904909.7
(22) Date de dépôt: 27.02.1996
(51) Int. Cl.: F16B 47/00

(54) **DISPOSITIF FORMANT VENTOUSE**
SAUGNAPFVORRICHTUNG
SUCTION CUP DEVICE

(30) Priorité: 28.02.1995 FR 9502461; 23.02.1996 FR 9602239
(43) Date de publication de la demande: 22.04.1998
(73) Titulaire: Charpin, Dominique Louis, 21200 Beaune (FR)
(72) Inventeur: Charpin, Dominique Louis, 21200 Beaune (FR)
(74) Mandataire: Verdier, Louis
(86) Numéro de dépôt international: FR9600299
(87) Numéro de publication internationale: WO9627087

(56) Documents cités:
- EP-A- 0 362 907
- EP-A- 0 568 077
- DE-U- 9 113 970
- US-A- 2 936 139
- US-A- 5 080 941
- US-A- 5 133 524

## Description

La présente invention concerne un dispositif formant ventouse pour fixer par gravité des objets sur une surface lisse ou polie, notamment pour articles funéraires.

Ce dispositif original s'applique sur des monuments funéraires en pierre, marbre ou granits, des objets de décoration tels que vases, jardinières, vasques, urnes cinéraires ou autres d'un poids variant entre 10 et 100 kilogrammes.

Jusqu'à présent et traditionnellement, les objets de décoration sont posés sur les monuments tels quels, ce qui peut faciliter leur glissement ou leur chute par grands vents ou encore leur vol.

Pour éviter ces inconvénients, les moyens connus permettent de fixer par des colles fortes, les objets aux monuments ou encore de goujonner la partie inférieure des objets de décoration pour les fixer à l'aide d'une tige filetée au monument.

Ces moyens bien qu'efficaces contre le vol, s'avèrent par contre inadaptés à l'usage souhaité par les familles qui recherchent généralement la mobilité des objets mis en place sur les monuments et bien entendu un entretien des plus aisés de ces derniers.

Or, les moyens connus collés, provoquent le plus souvent la casse des objets eux-mêmes d'une valeur certaine et le goujonnage laisse après enlèvement de l'objet, un trou visible particulièrement disgracieux.

Par ailleurs, la mobilité des objets s'impose, ne serais-ce que pour le nettoyage de la surface sur laquelle ils reposent ou pour un réaménagement différent des objets disposés sur ladite surface.

### ART ANTERIEUR & ETAT DE LA TECHNIQUE:

On connait dans la technique un dispositif pour retenir un objet sur une surface lisse ou pour immobiliser un objet sur un navire, qui fait usage d'une ventouse.

Ce dispositif bien qu'intéressant pour le secteur d'activité concerné, ne peut en aucune manière être intégré à un article funéraire ou placé entre ce dernier et le support, constitué par le monument.

En effet, la pièce maîtresse, de forme cylindrique, occultée sur les bases inférieures et supérieures par des membranes Mo & Ma, fait office de ventouse lorsqu'on amorce un mouvement de vissage, ce qui a pour conséquence de créer un vide d'air temporaire entre la membrane supérieure et la pièce et la membrane inférieure et le support.

Ce dispositif, permet de maintenir temporairement l'objet par vide d'air sous dépression alors que celui visé par la présent invention permet de fixer l'objet par vide d'air sans pression. Ce qui permet lors de toute tentative de soulèvement dudit objet à la ventouse d'agir: l'air ne peut pénétrer à l'intérieur et l'objet est ainsi retenu pour une durée importante de 1 à 2 ans.

On a décrit dans le document US-A-2 936 139 (O. L. LINDSTROM) un support de maintien d'un pied , par exemple de machine à écrire. Ce support comprend une ventouse qui a une face reposant sur le sol, par exemple, et telle qu'on fait le vide entre le sol et la face au moyen du poids du pied de la machine. Si on veut désolidariser le support du sol, on enlève le pied de la machine à écrire et on fait pénétrer de l'air au moyen d'une vis qui agit sur le tube placé au centre de la ventouse, en faisant ainsi pénétrer l'air.
Le dispositif décrit dans ce document ne permet pas de fixer un objet lourd sur le sol. En effet, on fixe un coussin ou support de maintien d'un pied de machine, ce coussin étant léger puisqu'en caoutchouc. La machine qui est un objet lourd n'est pas fixée au sol. De plus, il n'existe pas de clé spéciale permettant de réaliser le verrouillage et déverrouillage de l'objet sur le sol.

### DESCRIPTION DE L'INVENTION

La présente invention à pour but de remédier aux inconvénients des moyens connus et concerne à cet effet un dispositif formant ventouse pour fixer des objets, notamment funéraires sur une surface lisse ou polie d'une conception simple , efficace et d'une mise en oeuvre particulièrement adaptée.

A cet effet, l'invention concerne un dispositif pour fixer un objet lourd sur une surface plane et lisse, le dispositif étant constitué d'au moins une ventouse et d'un objet à fixer comportant au moins une cavité concave réalisée sous l'objet à fixer et ayant une forme correspondant à la forme aplatie de la ventouse et un orifice traversant l'objet depuis la cavité concave jusqu'au côté opposé; ladite ventouse étant munie d'un manchon creux et étant introduite dans la cavité concave, tandis que le manchon est introduit dans l'orifice réalisé dans l'objet.

Le dispositif selon l'invention est tel que ladite ventouse comporte des moyens de solidarisation de l'objet avec la ventouse, l'étanchéité à l'air entre la ventouse et l'objet étant assurée par la compression du manchon de la ventouse dans l'orifice de l'objet à l'aide des moyens de solidarisation serrés avec une clé de verrouillage et déverrouillage; la fixation de l'ensemble objet - ventouse - moyens de solidarisation sur la surface plane étant assurée d'une part par gravité lorsqu'on pose cet ensemble sur la surface plane, la ventouse se vidant d'air et d'autre part par la compression du manchon.

Selon d'autres caractéristiques de l'invention :

Les moyens de solidarisation objet-ventouse sont constitués par une douille taraudée placée dans le manchon de la ventouse , une vis à collerette étant placée dans la douille et pouvant être bloquée à l'aide de la clé.
Le col du manchon de la ventouse comporte une couronne d'étanchéité assurant l'étanchéité à l'eau.

La ventouse est munie d'une membrane d'isolation évitant le contact entre l'objet et la surface plane.

La clé permettant le verrouillage et le déverrouillage est spécifique à chaque objet.

L'invention est représentée à titre non limitatif dans les dessins annexés, dans lesquels:
- La figure 1, représente une vue en coupe du dispositif conforme à l'invention.
- La figure 2, représente une variante de réalisation dudit dispositif.

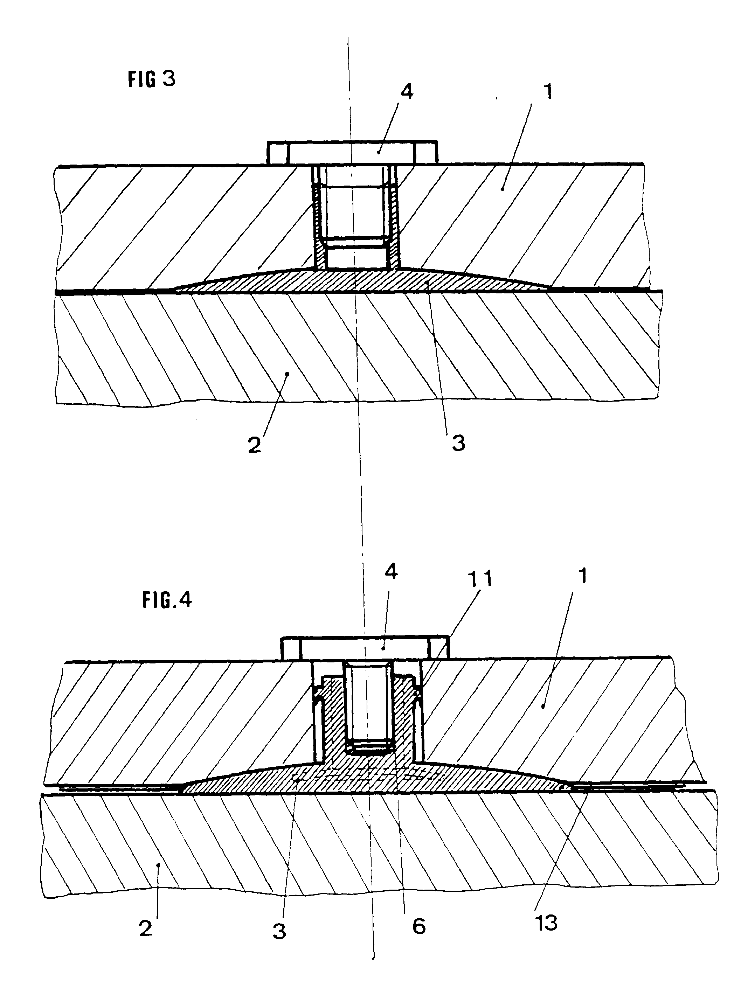

- Les figures 3 et 4 représentent le dispositif conforme à l'invention en place sur l'objet à équiper, positionné sur la surface lisse à laquelle il est destiné.

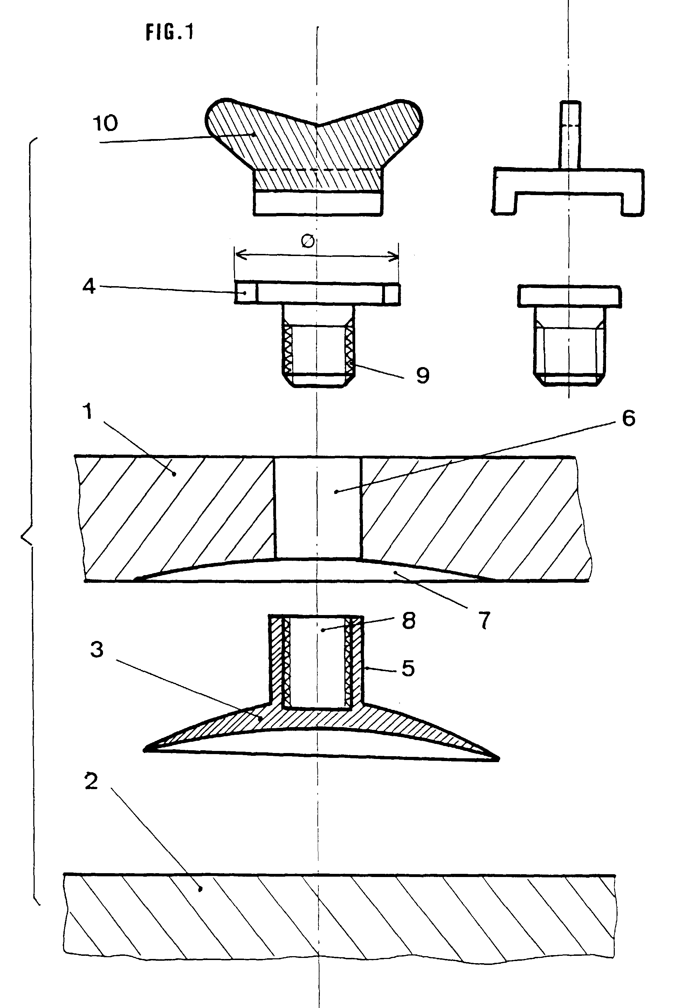

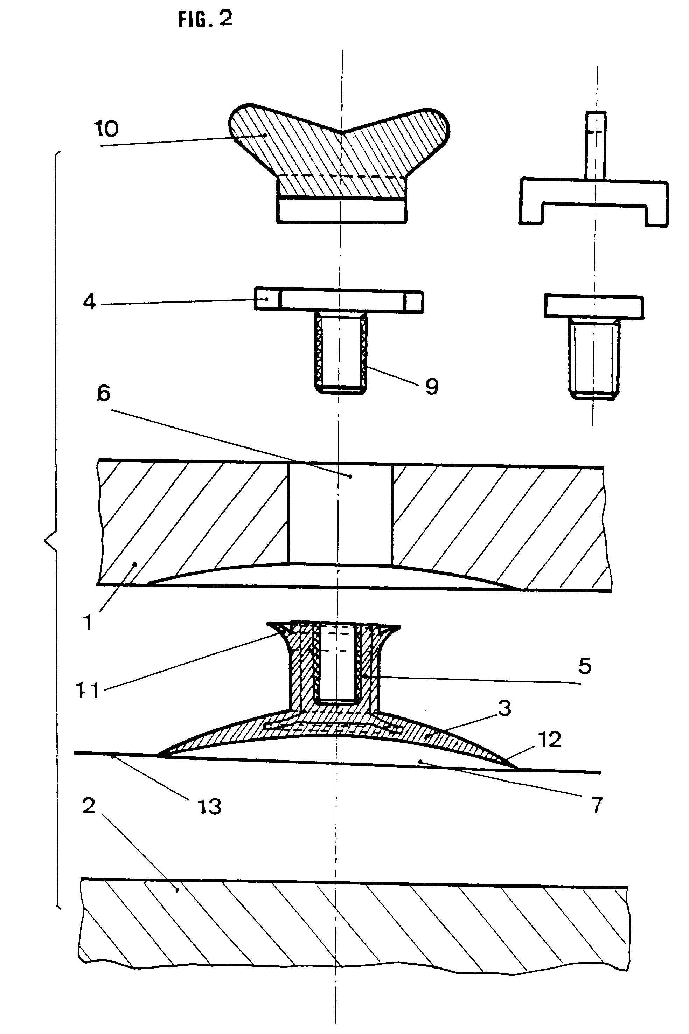

Comme on l'a représenté sur les Figures 1 et 2, le dispositif formant ventouse pour fixer des objets (1) sur une surface lisse ou polie (2) résulte de la combinaison d'une ventouse à manchon (3), munie d'un moyen de solidarisation (4) et d'un objet à équiper, dans lequel prend place en partie inférieure, la ventouse et son manchon (5), par l'intermédiaire d'un orifice (6) qui débouche sur une cavité concave (7), sensiblement aplatie, celle-ci sert de logement ou d'empreinte à la dite ventouse; l'ensemble ainsi constitué est fixé par gravité sur la surface à laquelle il est destiné ou il est immobilisé.

On peut aussi prévoir la combinaison d'une ou plusieurs ventouses à manchon, munies chacune d'un moyen de fixation et de verrouillage et d'un objet à équiper dans lequel prend place, chaque ventouse et son manchon, par l'intermédiaire d'un orifice débouchant sur une cavité concave, sensiblement aplatie, qui sert de logement ou d'empreinte à chaque ventouse; l'ensemble ainsi constitué est fixé par gravité à la surface à laquelle il est destiné.

Le manchon (5) de la ventouse (3) comporte un moyen de verrouillage constitué par une douille taraudée (8) dans laquelle est mise en place un moyen de fixation constitué par une vis à collerette (9) qui peut être bloquée à l'aide d'une (10) clé à configuration déterminée. La configuration de la clé est spécifique à chaque modèle.

L'objet à équiper (1) est muni à cet effet, d'un orifice (6) et d'un logement ou empreinte concave (7), sensiblement aplatie, destinée à la mise en place de la ventouse (3) et son manchon (5), lequel est disposé à travers l'orifice de l'objet à équiper.

Le dispositif associé à l'objet à équiper , adhère à la surface lisse ou polie à laquelle il est destiné par gravité.

Le dispositif associé à l'objet à équiper, adhère à la surface lisse ou polie, à laquelle il est destiné, par gravité à l'aide d'un moyen de fixation et verrouillage (4).Le moyen de verrouillage permet de bloquer le manchon (5) de la ventouse (3) dans l'orifice (6) de l'objet associé, sans que le col du manchon ne touche les bords dudit objet.
Ainsi, si l'utilisateur veut enlever ou soulever l'objet de cette surface lisse, la ventouse accompli sa fonction et retient l'objet hermétiquement.

Selon la dimension de la ventouse, la traction exercée pourra s'échelonner entre 60 à 100 kg ( voir plus ), plus le poids de l'objet qui est sans prise et ne peut donc plus être déplacé.

Comme on l'a représenté Figure 2, le col du manchon (5) de la ventouse (3) est muni d'une couronne d'étanchéité (11).La jupe (12) de la ventouse sert de protection entre l'objet et la surface adhérente pour éviter le contact des deux matières et limiter les risques de rayures. La ventouse est pourvue dans certains cas, d'une membrane d'isolation (13) de l'objet associé avec la surface lisse ou polie à laquelle il est destiné.

Le montage est réalisé en usine, supprimant toute manoeuvre fastidieuse.

Lors de l'expédition, le transport est assuré dans un carton de compensation ajouré à l'emplacement de la ou des ventouses parant à toute adhésion.

L'invention concerne notamment, les objets de décoration, vases, jardinières, vasques, urnes cinéraires ou autres munis des dispositifs ci-dessus.

L'invention s'applique en général à la fixation d'objets sur une surface lisse ou polie.

## Revendications

1. Dispositif pour fixer un objet lourd sur une surface plane et lisse, le dispositif étant constitué d'au moins une ventouse (3) et d'un objet (1) à fixer comportant au moins une cavité concave (7) réalisée sous l'objet (1) à fixer et ayant une forme correspondant à la forme aplatie de la ventouse (3) et un orifice (6) traversant l'objet (1) depuis la cavité concave (7) jusqu'au côté opposé; ladite ventouse (3) étant munie d'un manchon creux et étant introduite dans la cavité concave (7), tandis que le manchon (5) est introduit dans l'orifice (6) réalisé dans l'objet (1), caractérisé en ce que ladite ventouse comporte des moyens de solidarisation (4) de l'objet (1) avec la ventouse (3), l'étanchéité à l'air entre la ventouse (3) et l'objet (1) étant assurée par la compression du manchon (5) de la ventouse (3) dans l'orifice (6) de l'objet (1) à l'aide des moyens de solidarisation (4) serrés avec une clé (10) de verrouillage et déverrouillage; la fixation de l'ensemble objet-ventouse - moyens de solidarisation (1, 3, 4) sur la surface plane (2) étant assurée d'une part par gravité lorsqu'on pose cet ensemble sur la surface plane (2), la ventouse (3) se vidant d'air et d'autre part par la compression du manchon (5).

2. Dispositif selon la revendication 1, caractérisé en ce que les moyens de solidarisation objet-ventouse sont constitués par une douille taraudée (8) placée dans le manchon (5) de la ventouse (3), une vis à collerette (9) étant placée dans la douille et pouvant être bloquée à l'aide de la clé (10).

3. Dispositif selon l'une des revendications 1 et 2, caractérisé en ce que le col du manchon (5) de la ventouse (3) comporte une couronne d'étanchéité (11) assurant l'étanchéité à l'eau.

4. Dispositif selon l'une des revendications 1 à 3, caractérisé en ce que la ventouse (3) est munie d'une membrane d'isolation (13) évitant le contact entre l'objet (1) et la surface plane (2).

5. Dispositif selon l'une des revendications 1 à 4, caractérisé en ce que la clé (10) permettant le verrouillage et le déverrouillage est spécifique à chaque objet (1).

## Patentansprüche

1. Vorrichtung zur Befestigung eines schweren Gegenstandes an einer ebenen und glatten Fläche, wobei die Vorrichtung aus mindestens einem Saugnapf (3) und einem zu befestigenden Gegenstand (1) besteht, der mindestens einen konkaven Hohlraum (7) aufweist, der unter dem zu befestigenden Gegenstand (1) angeordnet ist und eine Form hat, die der flachen Form des Saugnapfes (3) entspricht, sowie eine Öffnung (6), die den Gegenstand (1) vom konkaven Hohlraum (7) bis zur gegenüberliegenden Seite durchquert; wobei der genannte Saugnapf (3) mit einem hohlen Stutzen versehen ist und in den konkaven Hohlraum (7) eingeführt wird, während der Stutzen (5) in die Öffnung (6) im Gegenstand (1) eingeführt wird, dadurch gekennzeichnet, dass der genannte Saugnapf Mittel (4) zur Befestigung des Gegenstandes (1) am Saugnapf (3) aufweist, wobei die Luftdichtheit zwischen dem Saugnapf (3) und dem Gegenstand (1) durch die Kompression des Stutzens (5) des Saugnapfes (3) in der Öffnung (6) des Gegenstandes (1) mit Hilfe der Befestigungsmittel (4) sichergestellt wird, die mit einem Schlüssel (10) zum Anziehen und Lockern angezogen werden; wobei die Befestigung der Gesamtheit Gegenstand-Saugnapf-Befestigungsmittel (1, 3, 4) an der ebenen Fläche (2) einerseits durch Schwerkraft sichergestellt wird, wenn diese Gesamtheit auf die ebene Fläche (2) gesetzt wird, wobei die Luft aus dem Saugnapf (3) entfernt wird, und andererseits durch die Kompression des Stutzens (5).

2. Vorrichtung nach Patentanspruch 1, dadurch gekennzeichnet, dass die Mittel zur Befestigung des Gegenstands am Saugnapf aus einer innengewindeten Hülse (8) bestehen, die im Stutzen (5) des Saugnapfes (3) angeordnet ist, wobei eine Schraube mit Kragen (9) in der Hülse angeordnet ist und mit Hilfe des Schlüssels (10) angezogen werden kann.

3. Vorrichtung nach einem der Patentansprüche 1 und 2, dadurch gekennzeichnet, dass der Hals des Stutzens (5) des Saugnapfes (3) einen Dichtungskragen (11) trägt, der die Wasserdichtigkeit sicherstellt.

4. Vorrichtung nach einem der Patentansprüche 1 bis 3, dadurch gekennzeichnet, dass der Saugnapf (3) mit einer Isoliermembran (13) versehen ist, die den Kontakt zwischen Gegenstand (1) und ebener Fläche (2) vermeidet.

5. Vorrichtung nach einem der Patentansprüche 1 bis 4, dadurch gekennzeichnet, dass der Schlüssel (10), der das Anziehen und Lockern ermöglicht, für jeden Gegenstand (1) spezifisch ist.

## Claims

1. A device for attaching a heavy object to a smooth, flat surface, the device having at least one sucker (3) and an object (1) to be attached having at least one concave cavity (7) provided underneath the object (1) to be attached and of a shape matching the flattened shape of the sucker (3) and an orifice (6) passing through the object (1) from the concave cavity (7) to the opposing face; said sucker (3) being provided with a hollow sleeve and being inserted in the concave cavity (7) whilst the sleeve (5) is inserted in the orifice (6) provided in the object (1), characterised in that said sucker has joining means (4) for joining the object (1) to the sucker (3), an air-tight seal between the sucker (3) and the object (1) being produced by compressing the sleeve (5) of the sucker (3) in the orifice (6) of the object (1) by the use of joining means (4) locked by a locking and unlocking key (10); the unit comprising object-sucker-joining means (1, 3, 4) being attached to the flat surface (2) on the one hand by gravity when this unit is laid on the flat surface (2), air being expelled from the sucker (3), and on the other hand by the compression of the sleeve (5).

2. A device as claimed in claim 1, characterised in that the object-sucker joining means consist of a threaded socket (8) placed in the sleeve (5) of the sucker (3), a flanged bolt (9) being placed in the socket which can be locked by means of the key (10).

3. A device as claimed in claims 1 and 2, characterised in that the neck of the sleeve (5) of the sucker (3) has a sealing ring (11) providing a water-tight seal.

4. A device as claimed in claims 1 to 3, characterised in that the sucker (3) is provided with an insulating membrane (13) to prevent any contact between the object (1) and the flat surface (2).

5. A device as claimed in claims 1 to 4, characterised in that the key (10) enabling locking and unlocking is specific to each object (1).
